# EUROPEAN PATENT APPLICATION

(11) **EP 0 967 062 A1**
(43) Date of publication of application: **29.12.1999**
(21) Application number: 99111794.6
(22) Date of filing: 18.06.1999
(51) Int. Cl.: B29C 45/27

(54) **Mold and molding method**

(30) Priority: 25.06.1998 JP 17919098; 10.09.1998 JP 25703898; 25.02.1999 JP 4783599; 11.03.1999 JP 6425099
(71) Applicant: SUMITOMO BAKELITE COMPANY LIMITED, Tokyo 100 (JP)
(72) Inventor: Hibino, Fumisato, Fujieda-shi (JP)
(74) Representative: Vossius, Volker, Dr.

(57) **Abstract**

There is disclosed a mold of a simple bushing construction in which a resin in a sprue portion is not cured, but is maintained at such a melt viscosity as to be molded so that this resin can be used in the subsequent molding operation so as to form a molded product, thereby enhancing the yield rate of the resin. In the mold of the invention for use in the injection molding of a thermosetting resin, a sprue portion has a bushing construction, and a space (51,52) for flowing a non-liquid cooling medium, such as the air, therethrough is formed between an outer peripheral surface of a sprue bushing (53) and a mold member (7) so as to keep the thermosetting resin in a molten state. Preferably, in order to effectively maintain the temperature of the resin in the sprue portion at a predetermined level, a plurality of recesses and projections (54) are formed at the outer peripheral surface of the sprue bushing (53). Preferably, at least two partition plates (55) are provided in the space to divide the space into sections, extending in a direction of a length of the sprue bushing (direction of flow of the resin), so that the cooling medium can flow from an inlet (58) of the space to a rear portion of the space, and then can reach an outlet (59) of the space. In order to prevent the resin of a relatively low temperature in the resin inflow-side portion from being cooled to be cured, a heat-insulating portion (40) is preferably provided in the resin inflow-side portion of the space to thereby reduce a passage for the cooling medium. It is also preferred that a cylindrical heat-insulating portion (50) be provided at an outer peripheral portion of the space in order to decrease the heat transfer from the mold member.

## Description

### BACKGROUND OF THE INVENTION

### Field of the Invention

This invention relates to a mold and a molding method used in the injection molding of a thermosetting resin, in which during the injection molding, a molten resin, residing in a sprue portion between an injection molding machine and a mold cavity, is not cured, but is maintained at such a viscosity as to be molded, and the resin, residing in this portion, is used in the subsequent (next) molding operation, thereby reducing the amount of waste resin so as to enhance the yield rate of the resin.

### Related Art

In the injection molding of thermoplastic resins, the use of an extended nozzle, a hot runner and so on have been studied in order to enhance the yield rate of the resin (that is, to reduce the amount of use of the resin), and these have already been put into practical use.

On the other hand, in the injection molding of thermosetting resins, the reaction and cure of the resin due to heat create large barriers, and therefore only part of measures for enhancing the yield rate of the resin have been put into practical use.

In one such method (disclosed, for example, in JP-A-50-82166), a sprue portion is formed by a separate bushing independent of a mold body, and using one or both of a heating medium (e.g. warm water or warm oil) and a heater, the sprue bushing is maintained at a predetermined temperature. With the use of this sprue bushing, a thermosetting resin, residing in this sprue bushing, is maintained at such a melt viscosity as to be molded, and the resin in the sprue bushing is effectively used in the subsequent molding operation. Thus, the continuous molding can be carried out in the sprueless molding.

However, for adjusting the heating medium (such as warm water and warm oil) to a predetermined temperature, a temperature control device for this particular purpose is usually needed, and besides the sprue bushing must be formed into a construction not to allow the leakage of the heating medium. Therefore, the sprue bushing of a precise construction must be used, and this increases the cost.

### SUMMARY OF THE INVENTION

This invention has been achieved after an extensive study has been made in order to solve the above problems encountered in the injection molding of thermosetting resins, and an object of the invention is to maintain a resin in a sprue portion at such a melt viscosity as to allow the molding without curing the resin so that this resin can be used in the subsequent molding operation so as to form a molded product.

This object has been achieved by a mold of the present invention, and in its basic construction, a sprue portion of the mold has a bushing construction, and a space is formed between an outer peripheral surface of the sprue bushing and a mold member, and a non-liquid cooling medium, such as air, is caused to flow through this space. Therefore, the continuous molding can be satisfactorily carried out without the need for any temperature control device and any sprue bushing of a precise construction as in the conventional sprue bushing of the temperature-adjusting type.

According to the present invention, there is provided a mold for use in the injection molding of a thermosetting resin comprising a sprue bushing construction, wherein a sprue portion has a bushing construction, and a space for flowing a non-liquid cooling medium, such as air, therethrough is formed between an outer peripheral surface of a sprue bushing and a mold member so as to keep the thermosetting resin in a molten state.

Preferably, in order to effectively maintain the temperature of the resin in the sprue portion at a predetermined level, a plurality of recesses and projections are formed at the outer peripheral surface of the sprue bushing. Preferably, at least two partition plates are provided in the space to divide the space into sections, extending in a direction of a length of the sprue bushing (direction of flow of the resin), so that the cooling medium can flow from an inlet of the space to a rear portion of the space, and then can reach an outlet of the space.

If there is a possibility that the resin of a relatively low temperature in the resin inflow-side portion is cooled to be solidified, it is preferred that a heat-insulating portion be provided in the resin inflow-side portion of the space to thereby reduce a passage for the cooling medium in order to avoid this possibility. It is also preferred that a cylindrical heat-insulating portion be provided at an outer peripheral portion of the space in order to decrease the heat transfer from the mold member.

In the mold of the present invention, as described above, the non-liquid cooling medium, such as the air, is caused to flow through the space between the sprue bushing and the mold member, and by doing so, the sprue portion can be cooled uniformly and efficiently, and therefore the molten resin in the sprue is not cured, but is maintained at such a viscosity as to be molded, and in the subsequent molding operation, the resin, residing in this portion, is poured into the mold cavity so as to form a molded product. Therefore, the continuous molding can be effected, and the resin, residing in the sprue portion, which was discarded in the conventional molding, can be efficiently used, and the amount of the resin, used for each molded product, can be reduced.

And besides, a sprue bushing of a precise construction (such as a sprue bushing of the temperature-adjusting type) free from a liquid leakage, as well as a temperature control device for heating a liquid, which have heretofore been used in some cases, are not needed. In the mold of the present invention, the mold construction is simple, and a non-liquid medium such as the air is used as the cooling medium, and therefore there is no fear that water leakage, oil leakage, rust and contamination occur.

Even if the resin in the sprue portion of the sprue bushing is cured or solidified during the molding operation because of some trouble, the cured or solidified resin can be easily ejected toward a parting surface.

And besides, the sprue bushing of the present invention is simple in construction, and therefore can be easily handled, and after the molding operation, the sprue bushing is withdrawn from the mold, and the residual resin (cured or solidified resin), remaining in the sprue, can be easily removed therefrom.

As is clear from the foregoing, the mold of the present invention is of a simple construction, and more specifically, the sprue portion has a bushing construction, and the space is formed between the sprue bushing and the mold member, and the non-liquid cooling medium, such as air, is caused to flow through this space. With this mold construction, the resin, residing in the sprue bushing, is maintained at such a melt viscosity as to be molded, and this resin is poured into the mold cavity in the subsequent molding operation so as to form a molded product, thereby enhancing the yield rate of the resin.

Furthermore, the cooling efficiency is good, and the cooling is effected uniformly, and therefore the degree of cooling of the cooling medium, such as the air, can be decreased, and the cooling medium cooled at a temperature near to a room temperature can be used. Since the non-liquid cooling medium such as the air is used, troubles such as liquid leakage seldom occur. Therefore, the mold of the present invention is suitably used in the injection molding of thermosetting resins.

### BRIEF DESCRIPTION OF THE DRAWINGS

Fig. 1 is a schematic, cross-sectional view of a molding apparatus (one example) having a conventional sprue bushing of the temperature-adjusting type;
Fig. 2 is a schematic, cross-sectional view of a molding apparatus (one example) employing a mold having a sprue bushing construction of the present invention;
Fig. 3 is an enlarged, cross-sectional view of a sprue bushing portion of Fig. 1;
Fig. 4 is a front-elevational view of the sprue bushing portion of Fig. 3;
Fig. 5 is an enlarged, cross-sectional view showing one example of sprue bushing portion of Fig. 2;
Fig. 6 is a front-elevational view of the sprue bushing portion of Fig. 5;
Fig. 7 is a cross-sectional view of the sprue bushing portion taken along the line VII-VII of Fig. 5;
Fig. 8 is an enlarged, cross-sectional view showing another example of sprue bushing portion of Fig. 2;
Fig. 9 is a cross-sectional view of the sprue bushing portion taken along the line IX-IX of Fig. 8;
Fig. 10 is an enlarged, cross-sectional view showing a further example of sprue bushing portion of Fig. 2;
Fig. 11 is a cross-sectional view of the sprue bushing portion taken along the line XI-XI of Fig. 10;
Fig. 12 is a horizontal cross-sectional view of the sprue bushing portion of Fig. 10;
Fig. 13 is an enlarged, cross-sectional view showing a further example of sprue bushing portion of Fig. 2;
Fig. 14 is a cross-sectional view of the sprue bushing portion taken along the line XIV-XIV of Fig. 13;
Fig. 15 is an enlarged, cross-sectional view showing a further example of a sprue bushing portion of Fig. 2;
Fig. 16 is a cross-sectional view of the sprue bushing portion taken along the line XVI-XVI of Fig. 15;
Fig. 17 is a cross-sectional view of the sprue bushing portion taken along the line XVII-XVII of Fig. 15;
Fig. 18 is an enlarged, cross-sectional view showing a further example of a sprue bushing portion of Fig. 2;
Fig. 19 is a cross-sectional view of the sprue bushing portion taken along the line XIX-XIX of Fig. 18; and
Fig. 20 is a cross-sectional view of the sprue bushing portion taken along the line XX-XX of Fig. 18.

### DESCRIPTION OF THE PREFERRED EMBODIMENTS

A mold, having a conventional sprue bushing of the temperature-adjusting type, and a mold, having a sprue bushing construction of the present invention, will now be described with reference to the drawings.

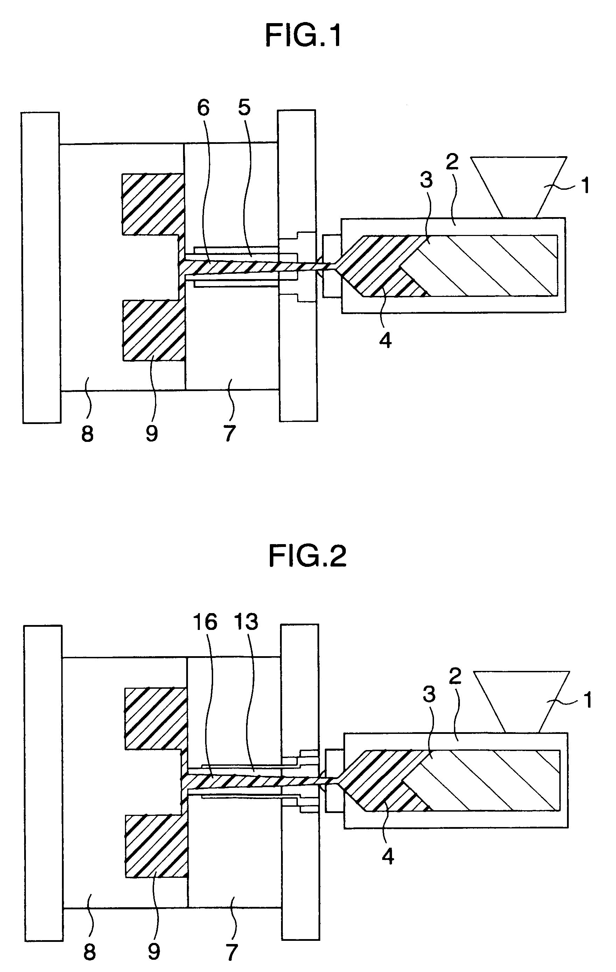

Fig. 1 is a schematic, cross-sectional view of a molding apparatus (one example) having the conventional sprue bushing of the temperature-adjusting type, and Fig. 2 is a schematic, cross-sectional view of a molding apparatus (one example) employing the mold having the sprue bushing construction of the present invention.

In Figs. 1 and 2, a thermosetting resin, charged into a hopper 1 of an injection molding machine, is melted by a cylinder 2 and a screw 3. The molten resin 4 is injected from the injection molding machine, and passes through a sprue bushing 5, 13, and is poured into a cavity 9 in a mold member 8, so that a molded product is formed. In each of the molding apparatuses shown respectively in Figs. 1 and 2, the resin, residing in a sprue portion 6, 16 of the sprue bushing 5, 13, is not cured, but is kept molten during the time period from this molding operation and a subsequent molding operation.

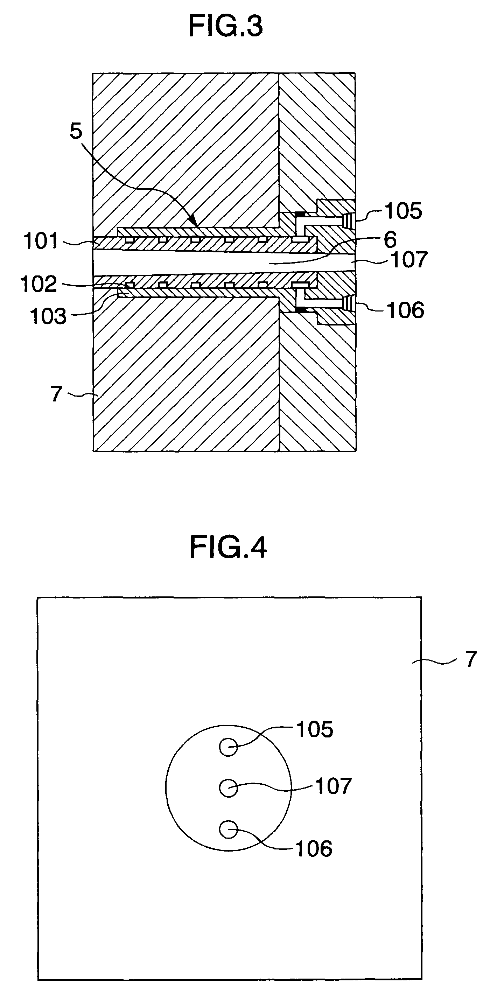

Fig. 3 is an enlarged, cross-sectional view of the sprue bushing portion of the conventional molding apparatus of Fig. 1, and Fig. 4 is a front-elevational view of the sprue bushing portion of Fig. 3.

In the mold of Fig. 3, a spiral groove 102 is formed by cutting in an outer peripheral surface of an outer tube 101 of the sprue portion 6 of the sprue bushing 5, and a sleeve-like member 103 is fitted on the outer tube 101 to seal this groove 102. During the molding operation, a liquid medium, such as warm water and warm oil, is caused to flow through the spiral grooves 102 via inlet and outlet 105 and 106 shown in Fig. 4, thereby maintaining the resin in the sprue portion 6 at a predetermined temperature. In Fig. 4, reference numeral 107 denotes an inlet of the sprue portion 6. Therefore, the resin, residing in the sprue portion 6, is not cured, but is maintained at such a melt viscosity as to be molded, and at the time of molding, this resin is filled in the cavity 9 in the mold member 8 so as to form the molded product.

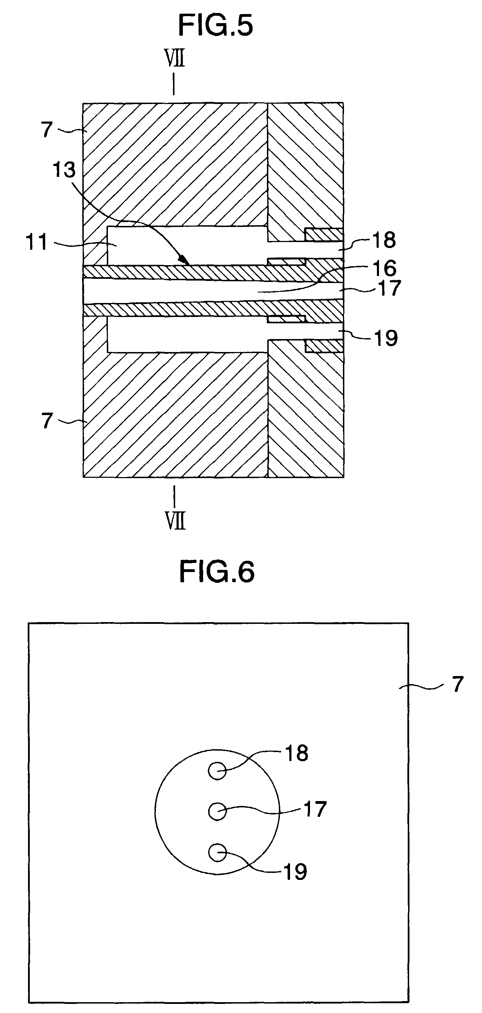

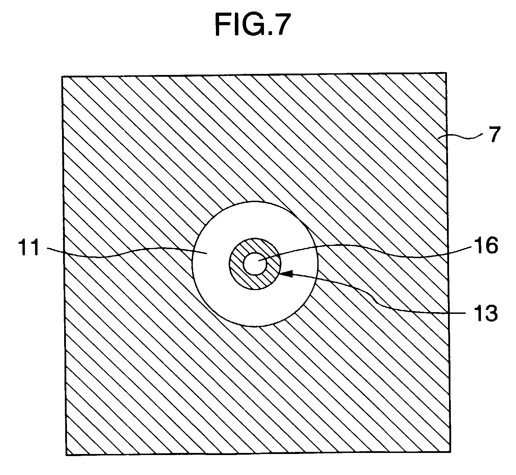

Fig. 5 is an enlarged, cross-sectional view of the sprue bushing portion (one example) of the molding apparatus of the present invention shown in Fig. 2, and Fig. 6 is a front-elevational view of the sprue bushing portion of Fig. 5, and Fig. 7 is a cross-sectional view of the sprue bushing portion taken along the line VII-VII of Fig. 5.

In this mold, the sprue bushing 13 is inserted into a mold member 7. The sprue bushing 13 has the sprue portion 16 (longitudinal central bore) formed axially therethrough, and has a generally cylindrical shape. A recess is formed by cutting in the mold member 7, so that a space (or cavity) 11 is formed between the outer peripheral surface of the sprue bushing 13 and the mold member 7. This space 11 serves as a passage for a medium.

As shown in Fig. 6, medium inlet and outlet 18 and 19, leading to the space 11, are formed in that surface of the sprue bushing 13 facing the injection molding machine. These inlet and outlet may be formed in the mold member 7 disposed around the sprue bushing 13. A non-liquid cooling medium, such as the air, is caused to flow through the space 11 formed between the sprue bushing 13 and the mold member 7, thereby maintaining the resin in the sprue portion 16 at a predetermined temperature. In Fig. 6, reference numeral 17 denotes an inlet of the sprue portion 16. Therefore, at the time of molding, the resin, residing in the sprue portion 16, is filled in the cavity 9 in the mold member 8 to form the molded product.

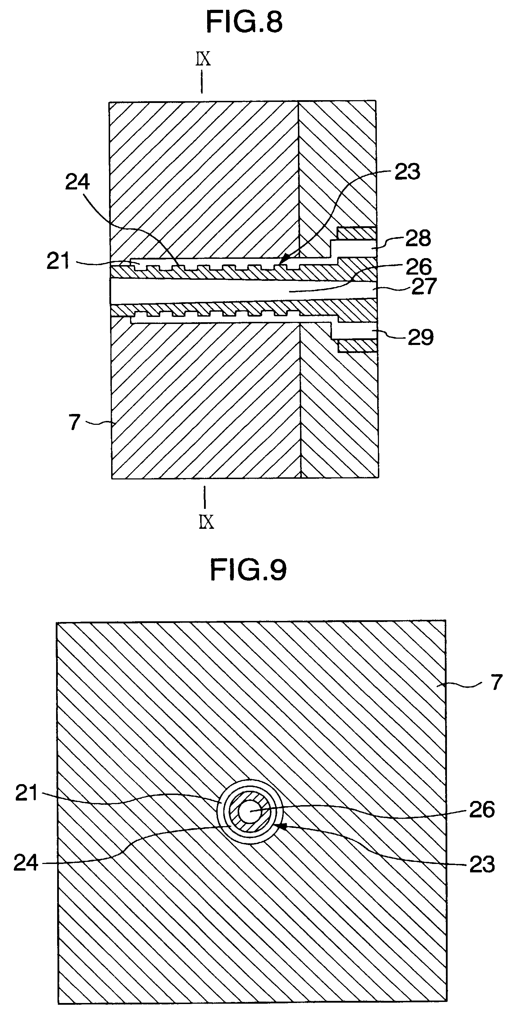

In another embodiment of a mold of the invention shown in Fig. 8, a plurality of recesses and projections 24 are formed at an outer peripheral surface of a sprue bushing 23. Fig. 9 is a cross-sectional view of a sprue bushing portion taken along the line IX-IX of Fig. 8. In the drawings, reference numeral 21 denotes a space serving as a passage for the medium, reference numerals 28 and 29 inlet and outlet through which the medium flows into and out of the space 21, reference numeral 26 a sprue portion, and reference numeral 27 an inlet of the sprue portion 26. The plurality of recesses and projections 24 are thus formed at the outer peripheral surface of the sprue bushing 23, and with this construction the surface area of the outer peripheral surface of the sprue bushing 23 is larger as compared with the case where such recesses and projections are not formed, and the cooling efficiency is enhanced.

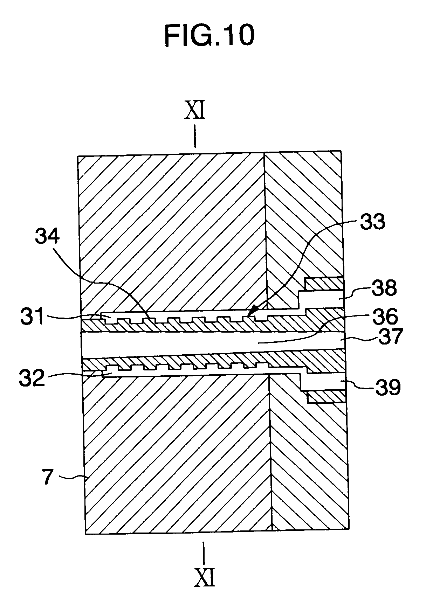

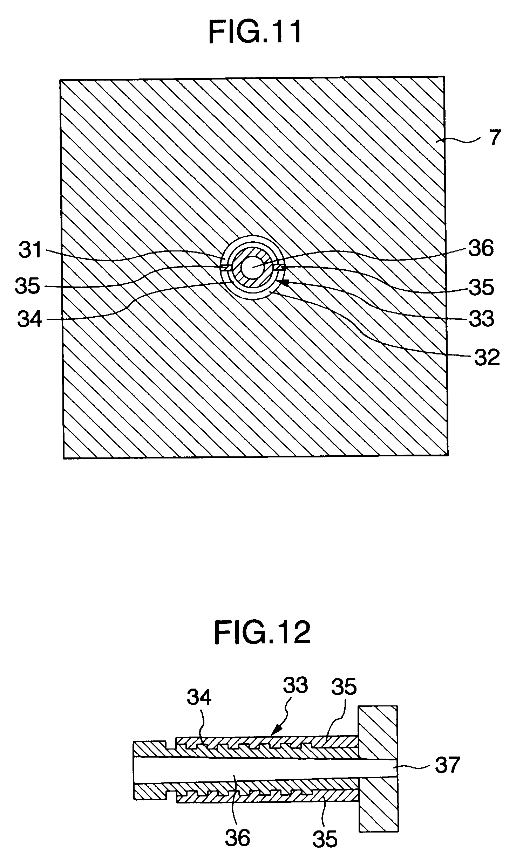

In a further embodiment of a mold of the invention shown in Fig. 10, in order to enhance the cooling efficiency achieved by the medium, a space between a sprue bushing 33 and a mold member 7 is divided into spaces 31 and 32 by partition plates 35. Fig. 11 is a cross-sectional view of the sprue bushing portion taken along the line XI-XI of Fig. 10, and Fig. 12 is a horizontal cross-sectional view of the sprue bushing portion of Fig. 10. The spaces 31 and 32 serve as passages for the medium. Outer edges of the partition plates 35 are held in contact with the mold member 7. However, the spaces 31 and 32 are not completely separated or isolated from each other, and the partition plates are not provided at a region near to a parting surface remote from cooling medium inlet and outlet (formed in the sprue bushing 33) disposed adjacent to the injection molding machine so that the fluid (medium) can flow between the spaces 31 and 32 at this region. Although the two partition plates 35 are usually provided, more than two partition plates can be provided in order to enhance the cooling efficiency if necessary. In the drawings, reference numeral 34 denotes recesses and projections, reference numerals 38 and 39 the inlet and outlet through which the medium flows into and out of the spaces 31 and 32, reference numeral 36 a sprue portion, and reference numeral 37 an inlet of the sprue portion 36.

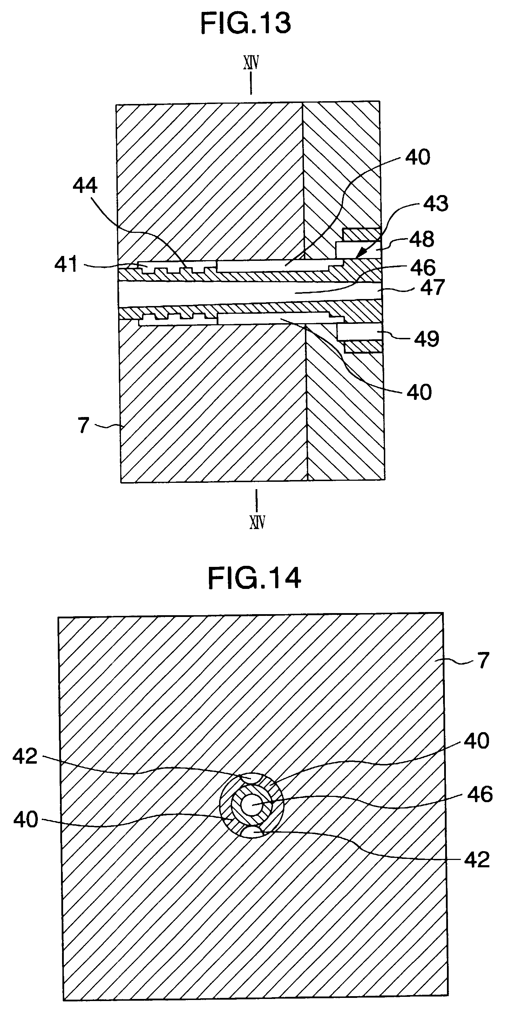

In a further embodiment of a mold of the invention shown in Fig. 13, a heat-insulating portion 40 is provided in a resin inflow-side portion of a space 41 between a sprue bushing 43 and a mold member 7 in such a manner that passages 42 for the cooling medium are formed. Fig. 14 is a cross-sectional view of the sprue bushing portion taken along the line XIV-XIV of Fig. 13. In the drawings, reference numeral 41 denotes the space, reference numeral 44 recesses and projections, reference numerals 48 and 49 inlet and outlet for the medium, reference numeral 46 a sprue portion, and reference numeral 47 an inlet of the sprue portion 46.

The heat-insulating portion 40, made of a material with a low thermal conductivity (such as ceramics, plaster, and a plastics material), is provided in the resin inflow-side portion of the space 41, thereby reducing the cooling medium passages 42. With this construction, the cooling efficiency, achieved by the medium, is not high at a region near to the cooling medium inlet and outlet 48 and 49 (that is, that portion near to the injection cylinder), and therefore the resin material, which has originally a relatively low temperature, is prevented from being solidified by the excessive cooling of the sprue portion. On the other hand, at a region remote from the cooling medium inlet and outlet 48 and 49 (that is, at that region near to a parting surface), the temperature of the resin tends to become high because of heat from the mold member 8 having the cavity. However, the cooling medium is efficiently in contact with the sprue bushing 43 to achieve the cooling effectively, and therefore the temperature rise of the resin is suppressed, so that the temperature of the resin in the bushing can be kept uniform.

That portion of the space 41, at which the heat-insulating portion 40 is not provided, can be divided into sections by partition plates, and by doing so, the cooling efficiency at that region near to the parting surface, can be enhanced. If the partition plates are made of a material with a good thermal conductivity, the surface area at the outer periphery of the bushing can substantially be increased, so that the cooling efficiency can be further enhanced. Recesses and projections may not be formed at the outer peripheral surface of that portion of the bushing at which the heat-insulating portion 40 is provided.

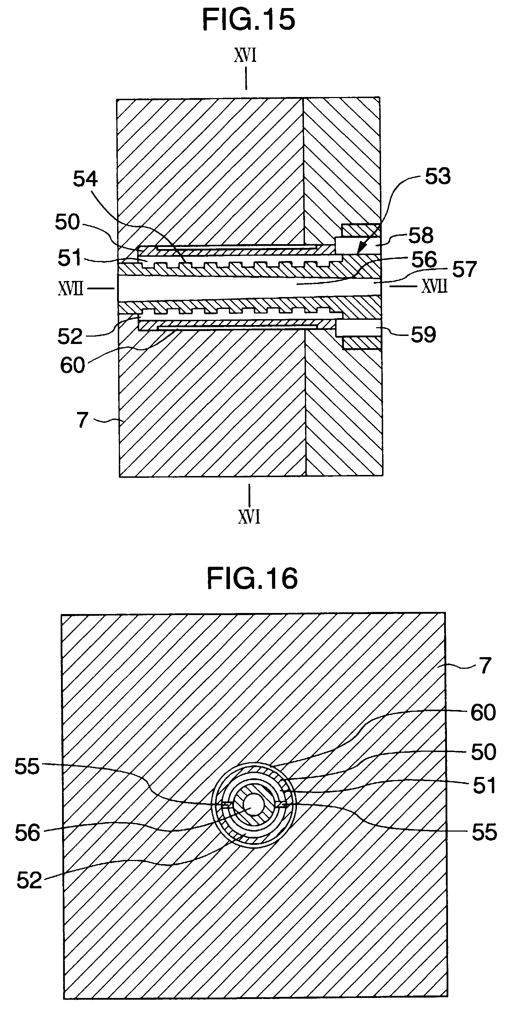

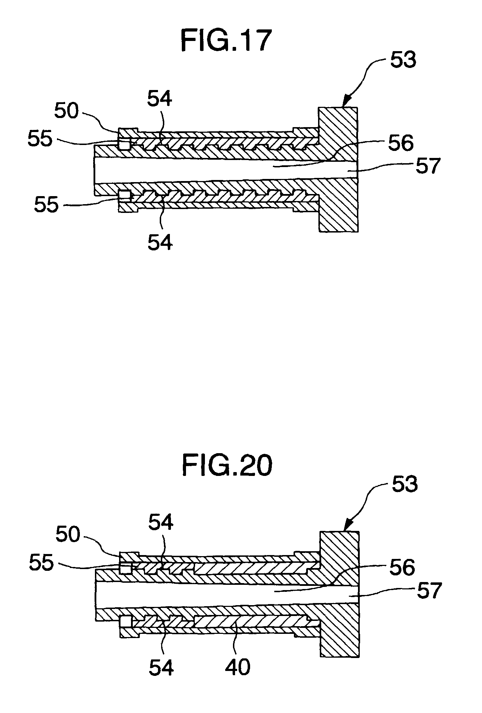

In a further embodiment of a mold of the invention shown in Fig. 15, a cylindrical heat-insulating portion 50 is provided at an outer peripheral portion of a space between a sprue bushing 53 and a mold member 7, that is, provided at an inner surface of a recess formed by cutting in the mold member 7. This cylindrical heat-insulating portion 50 serves to prevent the transfer of heat from the mold member 7 to the sprue bushing 53. Fig. 16 is a cross-sectional view of the sprue bushing portion taken along the line XVI-XVI of Fig. 15, and Fig. 17 is a cross-sectional view of the sprue bushing taken along the line XVII-XVII of Fig. 15.

In this mold, the cylindrical heat-insulating portion 50, made of a material with a low thermal conductivity (such as ceramics, plaster, and a plastics material), is provided at the inner surface of the recess formed by cutting in the mold member 7, and a plurality of recesses and projections 54 are formed at the outer peripheral surface of the sprue bushing 53. By providing the heat-insulating portion 50, the heat transfer from the mold can be prevented more effectively, and the cooling of the resin by the cooling medium can be performed more effectively because of the provision of the recesses and projections at the outer peripheral surface of the sprue bushing 53 as compared with the case where the plurality of recesses and projections are merely formed at the outer peripheral surface of the sprue bushing. Preferably, an air gap 60 is formed between the mold member 7 and the heat-insulating portion 50 in order to perform the heat insulation more effectively. By dividing the space into sections by partition plates 55, the cooling efficiency, achieved by the medium, can be further enhanced. In the drawings, reference numerals 51 and 52 denote the spaces separated from each other, reference numerals 58 and 59 inlet and outlet for the medium, reference numeral 56 a sprue portion, and reference numeral 57 an inlet of the sprue portion 56.

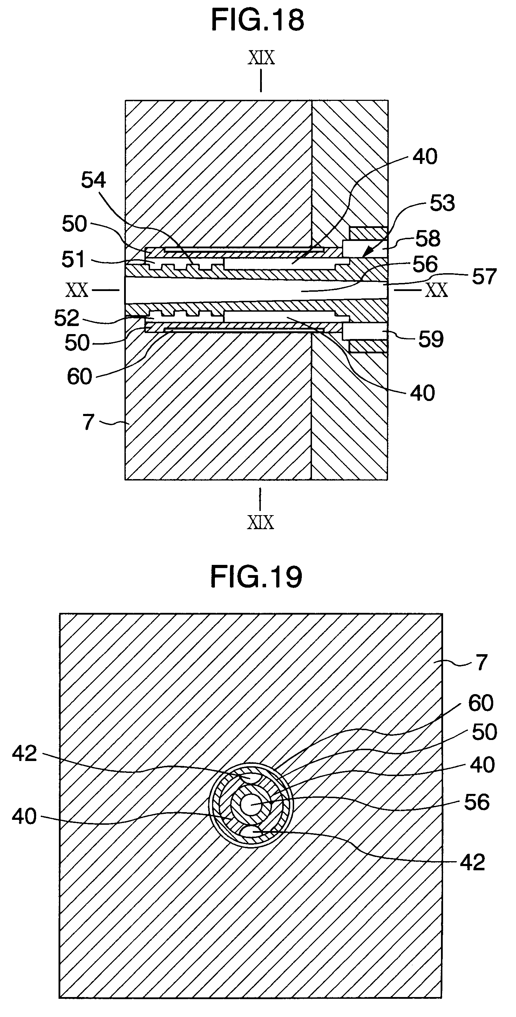

In a further embodiment of a mold of the invention shown in Fig. 18, a cylindrical heat-insulating portion 50 is provided at an outer peripheral portion of a space between a sprue bushing 53 and a mold member 7, and a heat-insulating portion 40 is provided in a resin inflow-side portion of the space in such a manner that passages 42 for the cooling medium are formed. That portion of the space, at which the heat-insulating portion 40 is not provided, is divided into sections by partition plates 55. Fig. 19 is a cross-sectional view of the sprue bushing portion taken along the line XIX-XIX of Fig. 18, and Fig. 20 is a cross-sectional view of the sprue bushing taken along the line XX-XX of Fig. 18. With this construction, the cooling efficiency at a region near to a parting surface can be more enhanced.

Preferably, an air gap 60 is formed between the mold member 7 and the heat-insulating portion 50 in order to perform the heat insulation more effectively.

This mold is used in the case where the temperature control of the spine portion is relatively difficult in connection with the characteristics of the resin material and the molding conditions. In Figs. 18 to 20, those portions similar to those of Fig. 15 are designated by identical reference numerals, respectively, and detailed explanation thereof is omitted.

## Claims

1. A mold for use in the injection molding of a thermosetting resin comprising a sprue bushing construction, wherein a sprue portion has a bushing construction, and a space for flowing a non-liquid cooling medium therethrough is formed between an outer peripheral surface of a sprue bushing and a mold member so as to keep the thermosetting resin in a molten state.

2. A mold according to claim 1, in which a plurality of recesses and projections are formed at the outer peripheral surface of said sprue bushing.

3. A mold according to claim 2, in which at least two partition plates are provided in said space to divide said space into sections, extending in a direction of a length of said sprue bushing, so that the cooling medium can flow from an inlet of said space to a rear portion of said space, and then can reach an outlet of said space.

4. A mold according to claim 2, in which a heat-insulating portion is provided in a resin inflow-side portion of said space, thereby reducing a passage for the cooling medium.

5. A mold according to claim 3, in which a heat-insulating portion is provided in a resin inflow-side portion of said space, thereby reducing a passage for the cooling medium.

6. A mold according to claim 2, in which a cylindrical heat-insulating portion is provided at an outer peripheral portion of said space.

7. A mold according to claim 3, in which a cylindrical heat-insulating portion is provided at an outer peripheral portion of said space.

8. A mold according to claim 4, in which a cylindrical heat-insulating portion is provided at an outer peripheral portion of said space.

9. A mold according to claim 6, in which an air gap is formed between the mold member and said heat-insulating portion.

10. A mold according to claim 7, in which an air gap is formed between the mold member and said heat-insulating portion.

11. A mold according to claim 8, in which an air gap is formed between the mold member and said heat-insulating portion.

12. A method of injection molding a thermosetting resin using a mold as defined in any one of claims 1 to 11, in which a product is molded while causing a non-liquid cooling medium to flow through said space.
